# EUROPEAN PATENT APPLICATION

(11) **EP 4 697 431 A1**
(43) Date of publication of application: **18.02.2026**
(21) Application number: 25735789.7
(22) Date of filing: 20.02.2025
(51) Int. Cl.: H01M 10/0567, H01M 10/0525, H01M 4/58, H01M 4/136

(54) **LITHIUM-ION BATTERY, AND ELECTRIC DEVICE USING SAME**

(30) Priority: 20.06.2024 CN 202410807296
(71) Applicant: Eve Power Co., Ltd., Jingmen, Hubei 448000 (CN)
(72) Inventor: LIU, Fei, Jingmen, Hubei 448000 (CN); LIU, Fanfen, Jingmen, Hubei 448000 (CN); LI, Chi, Jingmen, Hubei 448000 (CN)
(74) Representative: Berggren Oy
(86) International application number: PCT/CN2025/078158
(87) International publication number: WO 2025/260798

(57) **Abstract**

A lithium-ion battery and an electrical device using the same are provided. The lithium-ion battery includes a positive electrode, a negative electrode and an electrolyte. The active material of the positive electrode includes lithium manganese iron phosphate. The electrolyte includes a thiophene-based additive, and the chemical structure of the thiophene-based additive satisfies the Formula I: 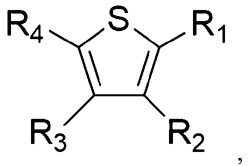 where at least one of R₁ to R₄ includes at least one of an amino group, a thienyl group, a pyridyl group, an acetyl group, an amido group, and an ester group, and the thiophene-based additive is included in an amount ranging from 0.08 wt% to 2.80 wt% based on a total mass of the electrolyte.

## Description

This application claims priority to Chinese Patent Application No. 2024108072961 filed in China National Intellectual Property Administration on June 20, 2024, the entire contents of which are incorporated herein by reference.

### TECHNICALFIELD

The present disclosure relates to the technical field of lithium-ion batteries, in particular to a lithium-ion battery and an electrical device using the same.

### BACKGROUND

Compared with lead-acid batteries, nickel-cadmium batteries, and nickel-metal hydride batteries, lithium ion batteries are widely used in hydropower, thermal power, wind power, solar power stations and other energy storage power systems, post and telecommunications, power tools, electric bicycles, electric motorcycles, electric vehicles, special equipment, special aerospace and other fields because of their high energy density, high working voltage, long life, and environmental protection. With the widespread use of electronic products, industry has put forward higher requirements for the cycling performance of lithium-ion batteries.

At present, lithium manganese iron phosphate battery is a kind of lithium-ion secondary battery with broad application prospects. Besides, lithium manganese iron phosphate has the advantages of high energy density, abundant raw material resources, low cost, environmental friendliness and high safety.

### SUMMARY OF INVENTION

### TECHNICAL PROPLEM

At high temperatures or high voltages, the John-Teller effect will occur during the cell cycle of lithium manganese iron phosphate, causing trivalent manganese to become divalent manganese, which increases the amount of manganese ions dissolved in the electrolyte. The manganese ions easily migrate to the negative electrode and reduce and deposit on the negative electrode surface, destroying the solid electrolyte interface (SEI) film and accelerating side reactions, resulting in the consumption of a large amount of active lithium, affecting the battery cycle capacity. Moreover, the dissolution of manganese ions in lithium iron manganese phosphate may cause damage to the positive electrode structure, lead to high interfacial impedance and battery capacity attenuation, and affect the cycle stability of the battery.

### TECHNICAL SOLUTIONS

In a first aspect, the present disclosure provides a lithium ion battery including a positive electrode, a negative electrode, and an electrolyte, where an active material of the positive electrode includes lithium manganese iron phosphate, and the electrolyte includes a thiophene-based additive, and the thiophene-based additive has a chemical structure satisfying Formula I: 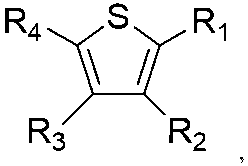 where at least one of R₁ to R₄ includes at least one of an amino group, a thienyl group, a pyridyl group, an acetyl group, an amido group, and an ester group, and the thiophene-based additive is included in an amount ranging from 0.08 wt% to 2.80 wt% based on a total mass of the electrolyte.

In a second aspect, the present disclosure provides an electrical device including the above-described lithium-ion battery.

### BENEFICIAL EFFECTS

In the present disclosure, by introducing a thiophene-based additive satisfying the above requirements into an electrolyte, it is possible to improve cycle stability of a positive electrode and a negative electrode. The thiophene-based additive includes a thiophene ring structure and a specific group having nitrogen, sulfur and/or oxygen elements containing lone pair electrons, and the specific group is directly connected to the thiophene ring. Therefore, the elements containing lone pair electrons in the thiophene-based additive may complex with manganese ions dissolved from the positive electrode material, effectively reducing the content of manganese ions in the electrolyte. Consequently, it mitigates side reactions between manganese ions and the electrolyte, prevents manganese ion migration to the surface of the negative electrode, reduces damage to the SEI film of the negative electrode caused by manganese ions, inhibits reduction of manganese ions to manganese metal at the negative electrode, minimizes manganese metal deposition on the negative electrode, suppresses manganese ion dissolution, enhances lithium ion diffusion in the positive electrode, decreases battery polarization, and reduces free manganese ions in the electrolyte. This ultimately prevents excessive manganese metal deposition at the positive electrode and simultaneously improves the stability of both the positive electrode and the negative electrode during battery cycling, thereby enhancing the cycle capacity retention rate of the lithium-ion battery.

On the other hand, the thiophene-based additive within the above content range can promote the formation of SEI film on the surface of the negative electrode and improve the structural stability of the SEI film, thereby reducing the interface impedance, improving battery cycling performance, delaying the aging of the negative electrode, and prolonging the cycle life of the battery using the electrolyte. In particular, after high-temperature storage, the manganese element of the positive electrode material is more likely to undergo a disproportionation reaction and dissolve into the electrolyte in the form of manganese ions. The electrolyte provided by the present disclosure also has good heat resistance, the thiophene-based additive can still form a stable complex with manganese ions under a high temperature environment. The SEI film formed by the thiophene-based additive, still has good mechanical properties, may improve the high-temperature cycle and high temperature storage performance of the battery, and may improve the capacity retention rate.

### DETAILED DESCRIPTION

In some embodiments, the thiophene-based additive is included in an amount of 0.08 wt%, 0.10 wt%, 0.25 wt%, 0.5 wt%, 0.75 wt%, 1.0 wt%, 1.25 wt%, 1.5 wt%, 1.75 wt%, 2.0 wt%, 2.50 wt%, 2.80 wt%, etc.

In some embodiments, the number of elements containing lone pair electrons of the thiophene-based additive is not less than 2.

In some embodiments, R₁ to R₄ may be each independently selected from the group consisting of a hydrogen atom, a methyl group, an ethyl group, a cyclopentyl group, a cyclohexyl group, a phenyl group, an amino group, a thiophenyl group, a pyridyl group, an acetyl group, a carboxamido group, and an ester group. And/or, R₁ and R₂, R₂ and R₃, and R₃ and R₄ each independently form a cyclic group, and the cyclic group is a 4-6 membered cyclic group. The 4-6 membered cyclic group is selected from the group consisting of a cyclic hydrocarbon and a heterocyclic cyclic group. The heterocyclic group contains O, S or N. The cyclic hydrocarbon is selected from the group consisting of a cycloalkane, a cycloalkene, and benzene.

In some embodiments, the thiophene-based additive is selected from at least one of cyclopentanothiophene, tetrahydrobenzothiophene, and benzothiophene.

In some embodiments, the number of elements containing lone pair electrons of the thiophene-based additive is no more than 4. The above thiophene-based additive has higher reaction activity with manganese ions, and the obtained complex has higher chemical stability, effectively reducing the free amount of manganese ions in the electrolyte.

In some embodiments, the number of elements containing lone pair electrons of the thiophene-based additive is 4.

In some embodiments, nitrogen element: sulfur element: oxygen element in the thiophene-based additive is 2: 1: 1 in molar ratio. After long-term experiments and verification, it is found that when the molar ratio of nitrogen element, sulfur element and oxygen element in the thiophene-based additive meets the above molar ratio, the bond energy of the coordination bond in the complex formed by the thiophene-based additive and manganese ions is larger, and the stability of the complex is higher, which helps to reduce the manganese deposition of the negative electrode, prevents manganese ions from destroying the SEI film of the negative electrode, thereby reducing the consumption of active lithium, and improving the cycle stability of the battery using the electrolyte. In particular, it is also possible to combine the thiophene-based additive and an ester-based additive, which may effectively inhibit the volume expansion of the negative electrode active material and effectively slow down the aging of the battery.

In some embodiments, the thiophene-based additive includes 2-amino-5,6-dihydrocyclopenta[b]thiophene-3-carboxamide.

In some embodiments, the mass ratio of the thiophene-based additive to the ester-based additive in the electrolyte is 0.08~2.80: 1.0~3.5. During the battery charging and discharging process, the negative electrode active material is prone to volume changes, and the conventional negative electrode SEI film will rupture with the volume change of the negative electrode active material, resulting in a decrease in battery capacity. When the mass ratio of thiophene-based additive to ester-based additive falls within the above range, it can promote the formation of an anion-rich inorganic film and a dense and stable organic polymeric SEI film on the surface of the negative electrode. The SEI film has excellent flexibility, mechanical properties and low interface impedance, can adapt to the volume change of the negative electrode active material, effectively isolate the direct contact between the negative electrode and the electrolyte, reduce the consumption and side reaction between the electrolyte and lithium ions, and effectively improve the battery capacity.

In some embodiments, the electrolyte further includes an ester-based additive. The ester-based additive includes at least one of vinylene carbonate (VC), vinyl sulfite (ES), vinyl sulfate (DTD), 1, 3-propane sulfonate (1, 3-PS), propylene sulfonate (PST). In the present disclosure, by introducing an ester-based additive into the electrolyte, during the battery cycle process, the ester-based additive is combined with the thiophene-based additive, so that the SEI film formed in the battery may have good flexibility and mechanical strength, thereby reducing the possibility of damage and cracking of the SEI film, effectively suppressing the volume expansion rate of the negative electrode material, and effectively improving the cycling performance of the battery.

In some embodiments, the mass ratio of the thiophene-based additive to the ester-based additive in the electrolyte is 0.08~2.80: 1.0~3.5. For example, the mass ratio of the thiophene-based additive to the ester-based additive is 0.08: 3.5, 0.20: 3.0, 0.5: 2.5, 1.0: 2.0, 1.5: 1.5, 2.0: 1.25, or 2.8: 1.0. By adjusting the mass ratio of the thiophene-based additive and the ester-based additive in the electrolyte, the structural stability of the SEI film formed in the battery may be improved, the damage of the SEI film may be reduced, and the consumption of the electrolyte caused by the contact between the electrolyte and the electrode may be reduced.

In some embodiments, the thiophene-based additive is included in an amount ranging from 0.10 wt% to 1.80 wt% based on a total mass of the electrolyte. When the amount of the thiophene-based additive added to the electrolyte is within the above range, the obtained lithium-ion battery may have excellent high-temperature storage and cycling performance, and may still maintain excellent battery usable capacity after high-temperature storage and 1,200 cycle charge and discharge experiments.

In some embodiments, the ester-based additive is included in an amount ranging from 1.00 wt% to 3.50 wt% based on the total mass of the electrolyte. For example, the ester-based additive is included in an amount of 1.00 wt%, 1.50 wt%, 2.00 wt%, 2.50 wt%, 3.00 wt%, 3.50 wt%. By introducing the ester-based additive in the above content range into the electrolyte, the film-forming performance of the electrolyte may be improved, the interface impedance may be reduced, and the battery cycling performance may be improved.

In some embodiments, the ester-based additive includes at least one of vinyl sulfate, vinylene carbonate. When the ester-based additive is in combination with the thiophene-based additive, it may promote the electrolyte to form a dense, flexible and low-impedance SEI film on the surface of the electrode. This combination enables the creation of a tightly structured layer without raising battery impedance, suppresses co-intercalation and reduction decomposition of the electrolyte at the electrode, and enhances the cycling performance of the lithium-ion battery.

In some embodiments, the ester-based additive includes vinylene carbonate, and vinylene carbonate is included in an amount of 2.50 wt% based on the total mass of the electrolyte.

In some embodiments, the electrolyte further includes a lithium salt, and the lithium salt is included in an amount ranging from 10.50 wt% to 13.00 wt% based on the total mass of the electrolyte. For example, the lithium salt is included in an amount of 10.50 wt%, 11.00 wt%, 11.50 wt%, 12.00 wt%, 12.50 wt%, or 13.00 wt%.

In some embodiments, the lithium salt includes lithium hexafluorophosphate and lithium bisfluorosulfonimide, and a mass ratio of the lithium hexafluorophosphate to the lithium bisfluorosulfonimide is 10.5~12: 0.5~2. By lithium hexafluorophosphate (LiPF₆) and lithium bisfluorosulfonimide (LiFSI), the conductivity of the electrolyte may be increased, and the transmission efficiency of lithium ions may be improved, thereby improving battery output characteristics and prolonging battery service life.

In some embodiments, the electrolyte further comprises an organic solvent. The organic solvent includes at least one of ethylene carbonate (EC), propylene carbonate (PC), dimethyl carbonate (DMC), diethyl carbonate (DEC), and ethyl methyl carbonate (EMC). The organic solvent has good compatibility with the thiophene-based additive and the ester-based additive, which may reduce side reactions in the battery cycle process and improve the battery cycle capacity retention rate.

In some embodiments, the organic solvent includes at least three of ethylene carbonate (EC), dimethyl carbonate (DMC), diethyl carbonate (DEC), ethyl methyl carbonate (EMC).

In some embodiments, the electrolyte further includes the organic solvent including ethylene carbonate (EC), dimethyl carbonate (DMC), and ethyl methyl carbonate (EMC).

In some embodiments, the mass ratio of ethylene carbonate, dimethyl carbonate, and ethyl methyl carbonate is 2~3: 4~4.5: 1.5~2. The electrolyte employing the organic solvent in the above mass ratio may improve the battery cycle characteristics and cycle capacity retention rate of the battery using the electrolyte after high-temperature storage.

In some embodiments, the active material of the negative electrode includes at least one of natural graphite, artificial graphite, and silicon carbon.

In some embodiments, the active material of the negative electrode includes artificial graphite.

In some embodiments, the lithium-ion battery further includes a separator disposed between the positive electrode and the negative electrode. The separator includes at least one of polypropylene, polyvinylidene fluoride, polytetrafluoroethylene, polyacrylonitrile, and polyethylene.

In some embodiments, the separator includes polypropylene.

### Example 1

This example provides a lithium-ion battery including a positive electrode, a negative electrode, and a separator disposed between the positive electrode and the negative electrode, and further including an electrolyte.

### (1) Electrolyte

The composition of the electrolyte is shown in Table 1.

**Table 1: Raw Material Composition for Preparing Electrolyte of Example 1**

| Raw Material Composition | | Percentage by Mass |
|---|---|---|
| Thiophene-Based Additive | 2-(2-Thiophene) Pyridine | 0.15 wt% |
| Ester-Based Additive | Vinylene Carbonate | 2.5 wt% |
| Lithium Salt | Lithium Hexafluorophosphate | 11.25 wt% |
| | Lithium Bisfluorosulfonimide | 1.5 wt% |
| Organic Solvent | Dimethyl Carbonate: Ethyl | the Balance |
| | Methyl Carbonate: Ethylene Carbonate = 3: 4.5: 2.5 | |

It should be noted that the ratio appearing in Table 1 is the mass ratio, such as "Dimethyl Carbonate: Ethyl methyl Carbonate: Ethylene Carbonate = 3: 4.5: 2.5", that is, the mass ratio of dimethyl carbonate, ethyl methyl carbonate and ethylene carbonate is 3: 4.5: 2.5, and they are mixed and matched as an organic solvent.

The CAS number of 2-(2-thiophene) pyridine is 3319-99-1, and its structural formula is as shown in Formula II:

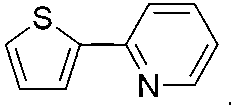

According to the above raw material composition, the electrolyte is prepared based on the following steps: in a glove box filled with argon, the organic solvent is uniformly mixed, and then the lithium salt, the ester-based additive and the thiophene-based additive are added to the organic solvent, and the electrolyte is obtained after uniformly mixing.

### (2) Positive Electrode

The positive electrode includes a positive electrode current collector and a positive electrode active coating layer, and the positive electrode active coating layer includes lithium manganese iron phosphate (LiFeMnPO₄) served as a positive electrode active material, carbon black (SP) and carbon nanotubes (CNT) served as conductive agents, polyvinylidene fluoride (PVDF) served as a positive electrode binder. In the positive active coating layer, the mass ratio of LiFeMnPO₄, SP, CNT and PVDF is 96.0: 2.0: 0.5: 1.5, and the solid content of the positive electrode binder is 1.327%.

Materials are prepared according to the above raw material composition and a positive electrode is prepared according to the following steps.

At step S1, the positive electrode active material, the conductive agent SP, and the solvent N-methylpyrrolidone (NMP) are uniformly mixed. Sequentially, the conductive agent CNT and the positive electrode binder are added into the reaction system to obtain positive electrode slurry. Then the solvent NMP is added into the positive electrode slurry to adjust the viscosity of the positive electrode slurry so that the viscosity of the positive electrode slurry is 15000 ± 3000 mPa·s and the fineness is less than or equal to 10 µm.

At step S2, the positive electrode slurry is coated on the surface of the positive electrode current collector, and after drying, the positive electrode active coating layer is obtained, and then post-treatment operations such as cold pressing and cutting are performed to obtain the positive electrode.

### (3) Negative Electrode

The negative electrode includes a negative electrode current collector and a negative electrode active coating layer. The negative electrode active coating layer includes graphite served as a negative electrode active material, carbon black (SP) served as a conductive agent, carboxymethyl cellulose (CMC) served as a negative electrode binder, and styrene-butadiene rubber (SBR) served as an aqueous dispersant. In the negative electrode active coating layer, the mass ratio of graphite, SP, CMC and SBR is 96.5: 1.5: 1.2: 0.8, and the solids content of the negative electrode binder is 8.0%.

Materials are prepared according to the raw material composition described above, and the negative electrode is prepared according to the following steps.

At step S1, the negative electrode active material, the conductive agent SP, and the solvent N-methylpyrrolidone (NMP) are uniformly mixed. Then a negative electrode binder is added into the reaction system in batches, then deionized water is added into the reaction system to adjust the viscosity of the reaction system, and finally the aqueous dispersant SBR is added into the reaction system to prepare a negative electrode slurry, where the viscosity of the negative electrode slurry is 4000 ± 1500 mPa·s and the fineness is less than or equal to 15 µm.

At step S2, the negative electrode slurry is coated on the surface of the negative electrode current collector, after drying, the negative electrode active coating layer is obtained, and then post-treatment operations such as cold pressing and cutting are performed to obtain the positive electrode.

### (4) Lithium Ion Battery

The positive electrode, the separator and the negative electrode are stacked in sequence, a cell is obtained by a lamination process, and then the cell is placed in an outer packing case and is dried. After that, the electrolyte is injected with the electrolyte injection coefficient of 5.8 g/Ah, and the lithium-ion battery is obtained by vacuum packaging, standing, chemical formation and capacity grading process.

### Example 2

In this example, a lithium ion battery is prepared with reference to the preparation method provided in Example 1, and the difference between this example and Example 1 is that in the process of preparing the electrolyte, bithiophene in an equal mass is used instead of the thiophene-based additive used in Example 1. The ratio of other raw materials and the preparation method are strictly consistent with those of Example 1.

The CAS number of bithiophene is 492-97-7, and its structural formula is as shown in Formula III:

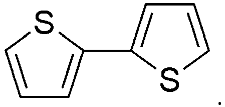

### Example 3

In this example, a lithium ion battery is prepared with reference to the preparation method provided in Example 1, and the difference between this example and Example 1 is that in the process of preparing the electrolyte, 2-acetylthiophene in an equal mass is used instead of the thiophene-based additive used in Example 1. The ratio of other raw materials and the preparation method are strictly consistent with those of Example 1.

The CAS number of 2-acetylthiophene is 88-15-3, and its structural formula is as shown in Formula IV:

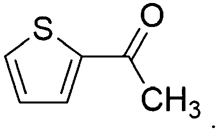

### Example 4

In this example, a lithium ion battery is prepared with reference to the preparation method provided in Example 1, and the difference between this example and Example 1 is that in the process of preparing the electrolyte, 3-methylthiophene-2-carboxamide in an equal mass is used instead of the thiophene-based additive used in Example 1. The ratio of other raw materials and the preparation method are strictly consistent with those of Example 1.

The CAS number of 3-methylthiophene-2-carboxamide is 76655-99-7, and its structural formula is as shown in Formula V:

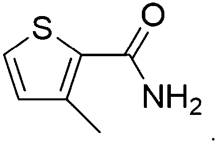

### Example 5

In this example, a lithium-ion battery is prepared with reference to the preparation method provided in Example 1. The difference between this example and Example 1 is that in the process of preparing the electrolyte, 2-amino-5, 6-dihydro-cyclopentanothiophene-3-carbonamide in an equal mass is used instead of the thiophene-based additive used in Example 1. The ratio of other raw materials and the preparation method are strictly consistent with those of Example 1.

The CAS number of 2-amino-5,6-dihydrocyclopenta[b]thiophene-3-carboxamide is 77651-38-8, and its structural formula is shown in Formula VI:

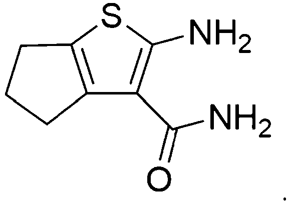

### Example 6

In this example, a lithium ion battery is prepared with reference to the preparation method provided in Example 1, and the difference between this example and Example 1 is that in the process of preparing the electrolyte, methyl 5-carbamoylthiophene-2-carboxylate in an equal mass is used instead of the thiophene-based additive used in Example 1. The ratio of other raw materials and the preparation method are strictly consistent with those of Example 1.

The CAS number of methyl 5-carbamoylthiophene-2-carboxylate is 1206087-41-3, and its structural Formula is shown in Formula VII:

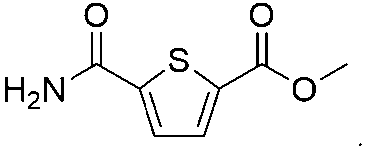

### Example 7

In this example, a lithium ion battery is prepared with reference to the preparation method provided in Example 5, and the difference between this example and Example 5 is that in the process of preparing the electrolyte, the content of the thiophene-based additive and the organic solvent in the electrolyte is adjusted so that the mass percentage of the thiophene-based additive in the electrolyte is 0.08%. The ratio of other raw materials and the preparation method are strictly consistent with those of Example 5.

### Example 8

In this example, a lithium ion battery is prepared with reference to the preparation method provided in Example 5, and the difference between this example and Example 5 is that in the process of preparing the electrolyte, the content of the thiophene-based additive and the organic solvent in the electrolyte is adjusted so that the mass percentage of the thiophene-based additive in the electrolyte is 1.80%. The ratio of other raw materials and the preparation method are strictly consistent with those of Example 5.

### Example 9

In this example, a lithium ion battery is prepared with reference to the preparation method provided in Example 5, and the difference between this example and Example 5 is that in the process of preparing the electrolyte, the content of the thiophene-based additive and the organic solvent in the electrolyte is adjusted so that the mass percentage of the thiophene-based additive in the electrolyte is 2.80%. The ratio of other raw materials and the preparation method are strictly consistent with those of Example 5.

### Example 10

In this example, a lithium ion battery is prepared with reference to the preparation method provided in Example 5, and the difference between this Example and Example 5 is that in the process of preparing the electrolyte, lithium hexafluorophosphate in an equal mass is used instead of lithium bisfluorosulfonimide used in Example 5. The mass percentage of lithium salt in the electrolyte in this Example is consistent with that in Example 5. The ratio of other raw materials and the preparation method are strictly consistent with those of Example 5.

### Example 11

In this example, a lithium ion battery is prepared with reference to the preparation method provided in Example 5, and the difference between this Example and Example 5 is that in the process of preparing the electrolyte, 1, 3-propane sulfonate (1, 3-PS) is used instead of the ester-based additive used in Example 5 in the process of preparing the electrolyte. The ratio of other raw materials and the preparation method are strictly consistent with those of Example 5.

### Example 12

In this example, a lithium ion battery is prepared with reference to the preparation method provided in Example 5, and the difference between this Example and Example 5 is that in the process of preparing the electrolyte, an organic solvent in an equal mass is used instead of the ester-based additive used in Example 5. The ratio of other raw materials and the preparation method are strictly consistent with those of Example 5.

### Example 13

In this example, a lithium ion battery is prepared with reference to the preparation method provided in Example 5, and the difference between this example and Example 5 is that in the process of preparing the electrolyte, the content of the ester-based additive and the organic solvent is adjusted so that the mass ratio of the ester-based additive in the electrolyte is 0.8%. The ratio of other raw materials and the preparation method are strictly consistent with those of Example 5.

### Example 14

In this example, a lithium ion battery is prepared with reference to the preparation method provided in Example 5, and the difference between this example and Example 5 is that in the process of preparing the electrolyte, the content of the ester-based additive and the organic solvent is adjusted so that the mass ratio of the ester-based additive in the electrolyte is 1.0%. The ratio of other raw materials and the preparation method are strictly consistent with those of Example 5.

### Example 15

In this example, a lithium ion battery is prepared with reference to the preparation method provided in Example 5, and the difference between this example and Example 5 is that in the process of preparing the electrolyte, the content of the ester-based additive and the organic solvent is adjusted so that the mass ratio of the ester-based additive in the electrolyte is 3.5%. The ratio of other raw materials and the preparation method are strictly consistent with those of Example 5.

### Comparative Example 1

In this comparative example, a lithium ion battery is prepared with reference to the preparation method provided in Example 5, and the difference between this comparative example and Example 5 is that in the process of preparing the electrolyte, an organic solvent in an equal mass is used instead of the thiophene-based additive used in Example 5, that is, the electrolyte prepared in this comparative example does not contain the thiophene-based additive. The ratio of other raw materials and the preparation method are strictly consistent with those of Example 5.

### Comparative Example 2

In this comparative example, a lithium ion battery is prepared with reference to the preparation method provided in Example 5, and the difference between this comparative Example and Example 5 is that in the process of preparing the electrolyte, thiophene in an equal mass is used instead of the thiophene-based additive used in Example 5. The ratio of other raw materials and the preparation method are strictly consistent with those of Example 5.

The CAS number of thiophene is 110-02-1, and its structural formula is shown in Formula VIII:

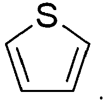

### Comparative Example 3

In this comparative example, a lithium ion battery is prepared with reference to the preparation method provided in Example 5, and the difference between this comparative example and Example 5 is that in the process of preparing the electrolyte, 4, 6-dimethyldibenzothiophene in an equal mass is used instead of the thiophene-based additive used in Example 5. The ratio of other raw materials and the preparation method are strictly consistent with those of Example 5.

The CAS number of 4, 6-dimethyldibenzothiophene is 1207-12-1, and its structural Formula is shown in Formula IX:

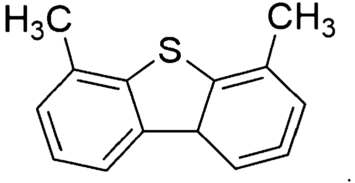

### Comparative Example 4

In this comparative example, a lithium ion battery is prepared with reference to the preparation method provided in Example 5, and the difference between this comparative example and Example 5 is that in the process of preparing the electrolyte, the content of the thiophene-based additive and the organic solvent in the electrolyte is adjusted so that the mass percentage of the thiophene-based additive in the electrolyte is 3.0%. The ratio of other raw materials and the preparation method are strictly consistent with those of Example 5.

### Comparative Example 5

In this comparative example, a lithium ion battery is prepared with reference to the preparation method provided in Example 5, and the difference between this comparative example and Example 5 is that in the process of preparing the electrolyte, the content of the thiophene-based additive and the organic solvent in the electrolyte is adjusted so that the mass percentage of the thiophene-based additive in the electrolyte is 0.05%. The ratio of other raw materials and the preparation method are strictly consistent with those of Example 5.

### Test Examples

The test objects are lithium-ion batteries provided in Examples 1 to 12 and Comparative Examples 1 to 5.

### Test Items and Test Methods

(1) Cycling performance: the test object is charged to 4.5 V at 1.0 C constant current and constant voltage at 25 °C, and the test object is maintained in its current state for 5 minutes, and then the test object is discharged to 2.5 V at 0.1 C, and the discharge capacity is recorded as the initial capacity. After that, the test object is charged to 4.5 V at 1.0 C constant current and constant voltage, and the initial volume of the battery is recorded. The test object is charged and discharged at 1C at 45 °C, the voltage range is from 2.5 V to 4.5 V, and the charge and discharge cycle is 1200 times. The discharge capacity of the 1200th cycle is recorded, and the capacity retention rate is calculated. The battery is taken out, and the volume of the battery after 1200 cycles is recorded. Capacity Retention Rate (%) = (Discharge Capacity at the 1200th Cycle/Initial Capacity) × 100%, Volume Change Rate (%) = (Volume After Cycle - Initial Volume)/Initial Volume × 100%.
(2) High temperature storage performance: the test object is charged to 4.5 V at 1.0 C constant current and constant voltage at 25 °C, and the test object is maintained in its current state for 5 minutes, and then the test object is discharged to 2.5 V at 0.1 C, and the discharge capacity is recorded as the initial capacity. Then the test object is charged to 4.5 V at 1.0 C constant current and constant voltage, and the initial volume of the battery is recorded. Then the test object is stored under open-circuit conditions at 60 °C ± 2 °C for 90 days. After that, the battery is taken out, the volume of the battery in a hot state is recorded and the test object is maintained at room temperature for 2 hours. Then the cell is charged and discharged at 1.0 C, the discharge capacity is recorded, and the capacity retention rate is calculated. Capacity Retention Rate (%) = Discharge Capacity after Storage/Initial Capacity × 100%, Volume Change Rate (%) = (Volume After Storage - Initial Volume)/Initial Volume × 100%.
(3) Amount of manganese deposition on the negative electrode: The test object is charged to 4.5 V at 1.0 C constant current and constant voltage at 25 °C, and the test object is maintained in its current state for 5 minutes, then the test object is discharged to 2.5 V at 0.1 C. After that, the negative electrode sheet is disassembled and taken out. The negative electrode sheet is first immersed in dimethyl carbonate, then dried and weighed to calculate the weight of the active material. The manganese content in the negative electrode is measured by inductively coupled plasma atomic emission spectroscopy, which is recorded as the initial amount of manganese deposition on the negative electrode. Then, the cells that have been cycled 1200 times and stored for 90 days based on the method in the above items (1) and (2) are taken out and discharged to 2.5 V, then the negative electrode sheet is disassembled and taken out. The negative electrode sheet is first immersed in dimethyl carbonate, then dried and weighed to calculate the weight of the active material. The manganese content in the negative electrode is measured by inductively coupled plasma atomic emission spectroscopy,

Test results: The composition of the electrolyte of the test objects is shown in Table 2, and the test results are shown in Table 3.

**Table 2. Composition of the Electrolyte of Each Test Object**

| Group | Thiophene-Based Additive | | | Ester-Based Additive | |
|---|---|---|---|---|---|
| | Formula | Number of Elements Containin g Lone Pair Electrons | Content | Type | Content |
| Example 1 | 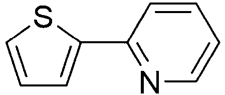 | 2 | 0.15% | VC | 2.5% |
| Example 2 | 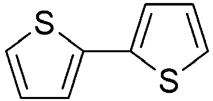 | 2 | 0.15% | VC | 2.5% |
| Example 3 | 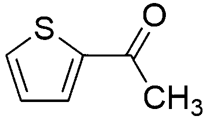 | 2 | 0.15% | VC | 2.5% |
| Example 4 | 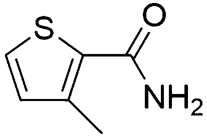 | 3 | 0.15% | VC | 2.5% |
| Example 5 | 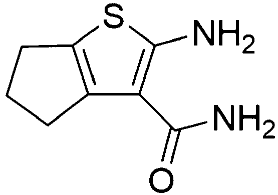 | 4 | 0.15% | VC | 2.5% |
| Example 6 | 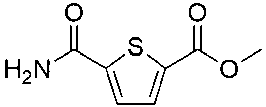 | 5 | 0.15% | VC | 2.5% |
| Example 7 | 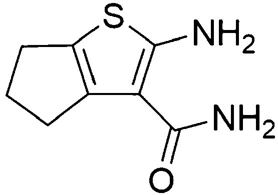 | 4 | 0.08% | VC | 2.5% |
| Example 8 | 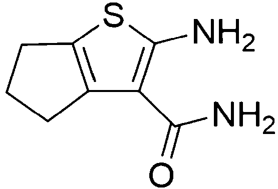 | 4 | 1.80% | VC | 2.5% |
| Example 9 | 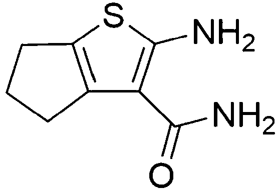 | 4 | 2.80% | VC | 2.5% |
| Example 10 | 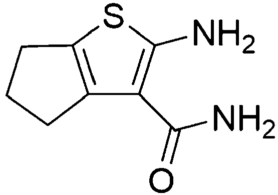 | 4 | 0.08% | VC | 2.5% |
| Example 11 | 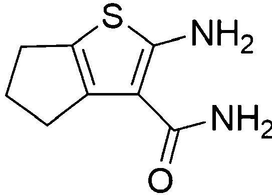 | 4 | 0.15% | 1, 3-PS | 2.5% |
| Example 12 | 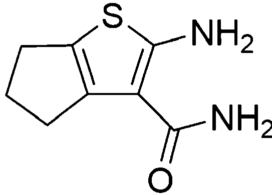 | 4 | 0.15% | / | / |
| Example 13 | 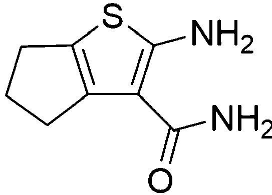 | 4 | 0.15% | VC | 0.8% |
| Example 14 | 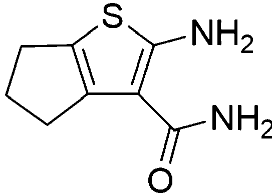 | 4 | 0.15% | VC | 1.0% |
| Example 15 | 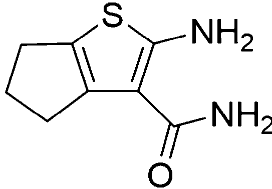 | 4 | 0.15% | VC | 3.5% |
| Comparat ive Example 1 | / | / | / | VC | 2.5% |
| Comparat ive Example 2 | 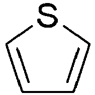 | 1 | 0.15% | VC | 2.5% |
| Comparat ive Example 3 | 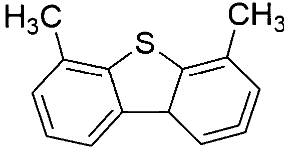 | 1 | 0.15% | VC | 2.5% |
| Comparat ive Example 4 | 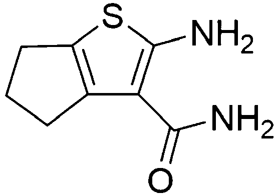 | 4 | 3.0% | VC | 2.5% |
| Comparat ive Example 5 | 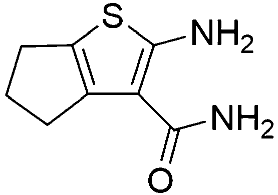 | 4 | 0.05% | VC | 2.5% |

It should be noted that in Examples 1 to 9, Examples 11 to 15, and Comparative Examples 1 to 5, a mixed lithium salt composed of lithium hexafluorophosphate and lithium bisfluorosulfonimide at a mass ratio of 11.25: 1.5 is used, and in Example 10, a single lithium salt of lithium hexafluorophosphate is used.

**Table 3. Performance Test Results of the Test Examples**

| Group | Initial Mang anese Depo sition (ppm) | Cycling 1200 times at 45 °C | | | Storing for 90 Days at 60 °C | | |
|---|---|---|---|---|---|---|---|
| | | Capacit y Retentio n Rate (%) | Volume Expansi on Rate (%) | Mangan ese Depositi on (ppm) | Capacit y Retentio n Rate (%) | Volume Expansi on Rate (%) | Mangan ese Depositi on (ppm) |
| Example 1 | 2.331 | 88.735 | 0.235 | 98.336 | 88.288 | 0.314 | 75.284 |
| Example 2 | 2.698 | 88.354 | 0.275 | 101.354 | 88.359 | 0.301 | 79.598 |
| Example 3 | 3.256 | 88.634 | 0.225 | 99.358 | 88.464 | 0.306 | 75.296 |
| Example 4 | 3.041 | 88.914 | 0.182 | 96.296 | 89.171 | 0.310 | 73.360 |
| Example 5 | 2.689 | 90.252 | 0.126 | 92.326 | 89.724 | 0.237 | 70.279 |
| Example 6 | 2.981 | 88.193 | 0.295 | 106.323 | 88.104 | 0.316 | 80.589 |
| Example 7 | 3.214 | 90.123 | 0.132 | 92.969 | 89.658 | 0.257 | 71.231 |
| Example 8 | 3.021 | 90.101 | 0.139 | 92.121 | 89.685 | 0.239 | 70.987 |
| Example 9 | 3.201 | 90.109 | 0.128 | 93.158 | 89.539 | 0.241 | 72.258 |
| Example 10 | 2.541 | 89.981 | 0.198 | 91.235 | 89.669 | 0.256 | 79.279 |
| Example 11 | 2.741 | 89.781 | 0.218 | 91.035 | 89.069 | 0.278 | 85.321 |
| Example 12 | 3.214 | 88.512 | 0.315 | 90.524 | 87.123 | 0.352 | 100.319 |
| Example 13 | 3.098 | 89.398 | 0.223 | 89.685 | 88.352 | 0.301 | 95.326 |
| Example 14 | 2.951 | 89.612 | 0.219 | 89.868 | 88.887 | 0.298 | 90.325 |
| Example 15 | 2.742 | 89.801 | 0.219 | 91.099 | 89.087 | 0.279 | 85.987 |
| Comparati ve Example 1 | 2.369 | 86.162 | 0.332 | 650.897 | 85.583 | 0.375 | 585.698 |
| Comparati ve Example 2 | 3.264 | 86.956 | 0.309 | 456.369 | 86.963 | 0.328 | 381.394 |
| Comparati ve Example 3 | 3.251 | 87.553 | 0.303 | 500.326 | 87.026 | 0.321 | 402.319 |
| Comparati ve Example 4 | 3.231 | 80.735 | 0.301 | 310.301 | 80.191 | 0.319 | 223.369 |
| Comparati ve Example 5 | 2.987 | 87.685 | 0.298 | 561.201 | 87.103 | 0.321 | 412.999 |

### Analysis of Results:

Comparing the test results of Examples 1 to 15 with those of Comparative Examples 1 to 5 in Table 2, it can be found that the comprehensive performance of the batteries provided by Examples 1 to 15 is superior to that provided by Comparative Examples 1 to 5. In the batteries provided by Examples 1 to 15, the electrolyte provided in Example 5 can effectively reduce manganese deposition on the negative electrode, and the provided battery has the best cycle characteristics and high temperature storage performance.

Comparing the comprehensive properties of Examples 1 to 6 with those of Comparative Examples 1 to 3, it can be found that as the amount of elements containing lone pair electrons of the thiophene-based additive increases, the amount of manganese deposited on the negative electrode and the volume expansion rate measured in the battery first decreases and then increases, and the cycle capacity retention rate and high temperature storage performance of the battery first increases and then decreases. Compared with the batteries of Comparative Examples 1 to 3, the batteries provided by Examples 1 to 6 have lower amount of manganese deposition on the negative electrode, have lower volume expansion rate, and have higher cycle capacity retention rate after 1200 cycles and/or after high temperature storage. Therefore, when the thiophene-based additive whose number of elements containing lone pair electrons is no less than two is used, the complexation activity of the thiophene-based additive and manganese ions can be effectively improved, and the content of manganese ions in the electrolyte can be effectively reduced, thereby reducing side reactions between manganese ions and the electrolyte, and improving the cycling performance of the battery As can be seen from the performance indexes in Table 3 of Comparative Examples 1 to 3, the amount of manganese deposition on the negative electrode in Comparative Examples 1 to 3 is higher, and the battery cycling performance are poorer. This is due to the fact that the thiophene-based additive is not used in the supplied electrolyte or the thiophene-based compound containing only one element containing a lone pair electrons is used as the thiophene-based additive, so that the cycling performance and high temperature storage performance of the batteries in Comparative Examples 1 to 3 are inferior to those in Examples 1 to 6. The steric hindrance of the thiophene-based additive in Comparative Example 2 is smaller than that of the thiophene-based additive in Comparative Example 3, and thus the complexation activity of the thiophene-based additive with manganese ions in Comparative Example 2 is higher than that of Comparative Example 3, which is reflected in that the manganese deposition amount of Comparative Example 2 cycling at 45°C and storage at 60°C is lower than that of Comparative Example 3.

Comparing the performance indexes of Examples 5, Examples 7 to 9 and Comparative Examples 4 to 5 in Table 3, it can be found that as the content of the thiophene-based additive in the electrolyte increases, the comprehensive performance of the lithium ion battery shows a trend of first increasing and then decreasing. Compared to the batteries of Comparative Examples 4 to 5, the batteries of Examples 7 to 9 have higher capacity retention rate, better high temperature storage performance, and lower volume expansion rate. Comparing the performance indexes of the batteries of Example 5 and Example 10, it can be found that the comprehensive performance of the battery of Example 5 using the mixed lithium salt is better than that of the battery of Example 10 using the single lithium salt. The electrolyte in the battery of Comparative Example 4 contains a larger amount of the thiophene-based additive, which increases the impedance of the battery and ultimately affects the normal cycling performance of the electrolyte, which is reflected in the low cycle capacity retention rate of the battery in Comparative Example 4.

In the batteries of Example 5 and Examples 12 to 15, the battery of Example 12 exhibits a relatively high volume expansion rate, which shows that the ester-based additive and the thiophene-based additive have a synergistic effect in the electrolyte, and can effectively suppress the volume expansion of the negative electrode active material, and effectively slow down the aging of the battery. It can be seen from Table 3, the performance indexes of the batteries in Example 5 and Examples 13-15 cycling at 45 °C are relatively close. However, the performance indexes of the batteries in Example 5 and Examples 14-15 after high temperature storage are better than those of Example 13. In particular, the amount of manganese deposition on the negative electrode of Example 5 and Examples 14 - 15 after high temperature storage is lower than that of Example 13. Therefore, when the mass ratio of the thiophene-based additive to the ester-based additive is in the range of 0.08~2.80:1.0~3.5, the structural stability of the SEI film formed in the battery can be improved, the cycling characteristics of the battery can be enhanced, and the complexation of the thiophene-based compounds with manganese ions can be promoted.

## Claims

1. A lithium ion battery, comprising a positive electrode, a negative electrode, and an electrolyte, an active material of the positive electrode comprising lithium manganese iron phosphate, and the electrolyte comprising a thiophene-based additive, wherein the thiophene-based additive has a chemical structure satisfying Formula I: 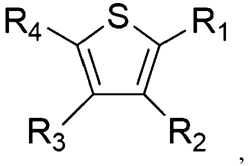 wherein at least one of R₁ to R₄ comprises at least one of an amino group, a thienyl group, a pyridyl group, an acetyl group, an amido group, and an ester group, and the thiophene-based additive is included in an amount ranging from 0.08 wt% to 2.80 wt% based on a total mass of the electrolyte.

2. The lithium-ion battery of claim 1, wherein the chemical structure of the thiophene-based additive satisfies:
that R₁ to R₄ are each independently selected from a group consisting of a hydrogen atom, a methyl group, an ethyl group, a cyclopentyl group, a cyclohexyl group, a phenyl group, an amino group, a thiophenyl group, a pyridyl group, an acetyl group, a carboxamido group, and an ester group; and/or
that R₁ and R₂, R₂ and R₃, and R₃ and R₄ each independently form a cyclic group, the cyclic group being a 4-6 membered cyclic group, the 4-6 membered cyclic group being selected from a group consisting of a cyclic hydrocarbon and a heterocyclic group, the heterocyclic group containing O, S or N, and the cyclic hydrocarbon being selected from a group consisting of a cycloalkane, a cycloalkene, and benzene.

3. The lithium-ion battery of claim 1, wherein the number of elements containing lone pair electrons of the thiophene-based additive is not more than 4.

4. The lithium-ion battery of claim 3, wherein nitrogen element: sulfur element: oxygen element in the thiophene-based additive is 2: 1: 1 in molar ratio.

5. The lithium-ion battery of claim 1, wherein the electrolyte further comprises an ester-based additive, the ester-based additive comprises at least one of vinylene carbonate, vinyl sulfite, vinyl sulfate, 1, 3-propane sulfonate, and propylene sulfonate.

6. The lithium-ion battery of claim 5, wherein a mass ratio of the thiophene-based additive to the ester-based additive in the electrolyte is 0.08~2.80:

7. The lithium-ion battery of claim 5, wherein the ester-based additive comprises at least one of vinyl sulfate and vinylene carbonate.

8. The lithium-ion battery of claim 1, wherein the electrolyte further comprises a lithium salt, and the lithium salt is included in an amount ranging from 10.50 wt% to 13.00 wt% based on the total mass of the electrolyte.

9. The lithium-ion battery of claim 8, wherein the lithium salt comprises lithium hexafluorophosphate and lithium bisfluorosulfonimide, and a mass ratio of the lithium hexafluorophosphate to the lithium bisfluorosulfonimide is 10.5~12: 0.5~2.

10. An electrical device, comprising the lithium-ion battery of any one of claims 1 to 9.
